Europäisches Patentamt

**European Patent Office**

**Office européen des brevets**

(19)

(11) Numéro de publication: **0 285 520 B1**

(12)

# FASCICULE DE BREVET EUROPEEN

(45) Date de publication de fascicule du brevet: **13.01.93**

(51) Int. Cl.5: **H04L 9/00**, G07F 7/10

(21) Numéro de dépôt: **88400793.1**

(22) Date de dépôt: **01.04.88**

(54) **Procédé pour acheminer des clés secrètes vers des modules de sécurité et des cartes utilisateurs, dans un réseau de traitement d'informations.**

(30) Priorité: **03.04.87 FR 8704729**

(43) Date de publication de la demande:
**05.10.88 Bulletin 88/40**

(45) Mention de la délivrance du brevet:
**13.01.93 Bulletin 93/02**

(84) Etats contractants désignés:
**AT BE CH DE ES FR GB IT LI NL SE**

(56) Documents cités:
**EP-A- 0 068 805**
**EP-A- 0 111 381**
**EP-A- 0 123 360**
**US-A- 4 633 037**

**IBM TECHNICAL DISCLOSURE BULLETIN, vol. 22, no. 2, juillet 1979, pages 629-631, New York, US; C.H. MEYER et al.: "Establishment of user keys in a multi-user network"**

**ICL TECHNICAL JOURNAL, vol. 4, no. 2, novembre 1984, pages 146-158, London, GB; R.W. JONES: "User functions for the generation and distribution of encipherment keys"**

(73) Titulaire: **BULL CP8**
**Rue Eugène Hénaff BP 45**
**F-78190 Trappes(FR)**

(72) Inventeur: **Hazard, Michel**
**27, Rue des Harias**
**F-78124 Mareil Sur Mauldre(FR)**
Inventeur: **Desjardins, Jean-Michel**
**7 allée des Epines**
**F-78180 Montigny le Bretonneux(FR)**
Inventeur: **Chemin, François**
**10, Rue Rodin**
**F-78370 Plaisir(FR)**

(74) Mandataire: **Siloret, Patrick et al**
**Bull S.A. Industrial Property Department**
**P.C.: HO 8M006 B.P. 193.16 121,Avenue de Malakoff**
**F-75116 Paris(FR)**

## Description

La présente invention concerne un procédé pour acheminer des clés secrètes et notamment des clés d'exploitations d'un nouveau service vers des modules de sécurité et des cartes utilisateurs dans un réseau de traitement d'informations.

Cette invention s'applique notamment à l'implantation et l'exploitation d'une nouvelle prestation de service dans un réseau existant. Elle permet aussi à l'utilisateur d'une carte de mémorisation et de traitement d'informations, d'accéder à une prestation de service nouvelle ou existante, dans un réseau.

Un réseau est constitué de plusieurs unités de traitements ou d'échanges d'informations tels que par exemple une ou plusieurs unités centrales de traitement, un ou plusieurs terminaux reliés à chaque unité centrale et pouvant communiquer avec des cartes d'utilisateurs de prestations de services. Les prestations de services peuvent être, par exemple, offertes par un organisme bancaire, un organisme de vente par correspondance, etc. On sait que dans un réseau, chaque unité de traitements ou d'échanges comporte elle-même un module dit de sécurité qui comprend généralement un microprocesseur relié à une mémoire, réalisé sous forme monolithique. Chaque module de sécurité permet à un organisme habilité de charger dans ce module au moins une clé de base secrète. Le module de sécurité peut calculer à partir de cette clé de base et par un algorithme de diversification approprié, au moins une clé diversifiée. Chaque module de sécurité peut authentifier notamment, par un programme approprié, une clé diversifiée comme ayant été élaborée à partir d'une clé de base prédéterminée.

La carte utilisateur est elle-même conçue comme un module de sécurité.

Un module de sécurité de ce type ainsi que le procédé de diversification d'une clé de base et d'authentification de la clé diversifiée obtenue sont décrits dans la demande de brevet européen EP-A 0 253 722 (publiée le 20.01.88), au nom du même demandeur-

Tout module de sécurité appartenant à une unité de traitement ou de communication d'informations ou constituant une carte utilisateur dans un réseau contient une clé diversifiée, lorsque le réseau fonctionne pour une prestation de service prédéterminée.

On sait que les clés diversifiées et secrètes qui permettent aux différents modules du réseau de communiquer en assurant l'authentification mentionnée plus haut sont enregistrées dans les différents modules de sécurité du réseau, par le constructeur de ces modules ou par un organisme habilité, dans un local sous haute surveillance, afin d'empêcher tout fraudeur de connaître les clés de bases et les clés secrètes diversifiées calculées à partir de ces clés de base.

Ainsi, chaque module de sécurité a une clé diversifiée secrète propre et différente des clés secrètes diversifiées attribuées aux autres modules de sécurité ou à la carte. Ces clés diversifiées permettent à tout module de sécurité dans le réseau (la carte elle-même pouvant être considérée comme un module de sécurité) de vérifier que la clé diversifiée enregistrée dans un module prédéterminé correspond bien à la clé secrète de base qui a permis d'obtenir cette clé secrète diversifiée ; cette clé de base est enregistrée dans un autre module de sécurité auquel le module prédéterminé est connecté.

Ce mécanisme d'authentification ou de certification de clés diversifiées est décrit dans la demande de brevet européen précitée.

L'exploitation d'un nouveau service dans un réseau, si elle nécessite bien l'utilisation de ces clés secrètes de base et de ces clés secrètes diversifiées obtenues respectivement à partir de ces clés de base, ainsi que la mise en oeuvre des procédures d'authentification des clés diversifiées décrites plus haut, nécessite de plus l'introduction dans les modules de sécurité du réseau de clés secrètes de base, dites d'exploitation de ce service ; ces clés d'exploitation ne sont diversifiées que dans le dernier module de sécurité du réseau (la carte utilisateur par exemple), permettant ainsi à ce dernier module d'accéder au nouveau service ainsi implanté dans le réseau.

On ne sait pas actuellement implanter une nouvelle prestation de service dans un réseau existant, sans avoir à renvoyer les modules de sécurité (y compris les cartes utilisateurs) de ce réseau vers un organisme habilité sous haute surveillance, pour que celui-ci enregistre dans ces modules les clés secrètes d'exploitation (diversifiées dans la carte utilisateur) de ce nouveau service.

Il en résulte que l'implantation d'un nouveau service est compliquée puisqu'elle nécessite le retrait des modules de sécurité du réseau pour les renvoyer à l'organisme habilité puis la remise en place de ces modules dans le réseau. Ces opérations sont longues et rendent le réseau inopérant pendant leur mise en oeuvre ; elles sont par conséquent coûteuses. De plus, elles comportent des risques de perte ou de destruction d'un ou plusieurs des modules de sécurité provisoirement retirés du réseau, ou même de détournement de ces modules par un fraudeur mal intentionné.

Ainsi, par exemple, l'article publié, dans "I.B.M. Technical Disclosure Bulletin", vol. 22, N° 2 de juillet 1979 (pages 629-631) décrit un procédé de mise en place de clés utilisateurs dans un réseau multi-utilisateurs.

L'adjonction d'une ou de plusieurs nouvelles stations dans le réseau, c'est-à-dire en fait l'implantation d'une ou de plusieurs nouvelles prestations de service dans le réseau existant, exige qu'un répertoire mémorisé dans chacune des anciennes stations soit modifié pour tenir compte de chaque nouvelle station, et qu'un répertoire soit mémorisé dans chaque nouvelle station, pour que l'ensemble des stations puissent communiquer entre elles de façon sécurisée. Tant que cette opération n'a pas été totalement réalisée, le réseau ne peut pas fonctionner avec les nouvelles stations: il est donc inopérant; de même, pendant la modification des répertoires des anciennes stations, le réseau est inopérant.

L'invention a précisément pour but de remédier à ces inconvénients et notamment de permettre l'implantation d'une nouvelle prestation de service dans un réseau existant, ainsi que l'accès de ce nouveau service à des utilisateurs, sans qu'il soit nécessaire de renvoyer les modules de sécurité des différents modules de ce réseau ainsi que les cartes utilisateurs vers un organisme habilité, pour implanter dans ces modules et ces cartes les clés secrètes d'exploitation de ce nouveau service dans le réseau.

Les buts sont atteints notamment en utlisant un module de chargement de clés d'exploitation, relié à un ou plusieurs des modules de sécurité du réseau. Les clés d'exploitation transitent de façon chiffrée, de proche en proche, vers les modules de sécurité de hiérarchie de moins en moins importante (module de sécurité d'un terminal relié à l'unité centrale, puis carte utilisateur par exemple) ; ces clés d'exploitation ne sont diversifiées que dans le dernier module de sécurité (la carte utilisateur dans l'exemple choisi). La transmission des clés d'exploitation depuis le module de chargement vers les autres modules du réseau qui est effectuée de façon chiffrée, évite toute fraude pendant cette transmission.

L'invention propose donc un procédé pour acheminer au moins une clé secrète prédéterminée dans le but de sécuriser l'exploitation d'une prestation de service, d'un module de sécurité d'une unité centrale (C1) d'un réseau d'exploitation de service vers un autre module de sécurité d'un terminal de ce réseau ou vers des cartes utilisateurs connectables au terminal et constituant elles-mêmes des modules de sécurité, caractérisé en ce qu'il consiste à transmettre une clé d'exploitation prédéterminée sous forme chiffrée, d'un module de sécurité présentant un niveau hiérarchique prédéterminée vers un module de sécurité (terminal ou carte) de niveau hiérarchique inférieur au niveau prédéterminé, ce chiffrement consistant à utiliser un algorithme de chiffrement contenu dans le module de niveau hiérarchique prédéterminé et faisant intervenir la clé d'exploitation prédéterminée ainsi qu'au moins une clé de transport diversifiée enregistrée dans le module de niveau hiérarchique inférieur au niveau prédéterminé, cette clé diversifiée nécessaire au chiffrement est obtenue par un algorithme de diversification contenu dans le module de niveau hiérarchique prédéterminé et faisant intervenir une clé de base de cette clé de transport diversifiée, ainsi que des informations de diversification provenant du module de niveau hiérarchique inférieur, la clé prédéterminée chiffrée d'exploitation étant déchiffrée en mettant en oeuvre, dans le module de niveau hiérarchique inférieur au niveau prédéterminé, un algorithme de déchiffrement, inverse de l'algorithme de chiffrement.

Selon une autre caractéristique, toute clé diversifiée transmise d'un module de niveau hiérarchique prédéterminé à un module de niveau hiérarchique inférieur pour y être enregistrée, est chiffrée, le procédé consistant à mettre en oeuvre un algorithme de chiffrement contenu dans le module de niveau hiérarchique prédéterminé et faisant intervenir la clé de transport diversifiée à transmettre ainsi qu'une autre clé diversifiée calculée par l'algorithme de diversification contenu dans le module de niveau hiérarchique prédéterminé et enregistrée dans le module de niveau hiérarchique inférieur au niveau prédéterminé, la clé diversifiée ainsi chiffrée étant déchiffrée par un algorithme inverse de l'algorithme de chiffrement, contenu dans le module de niveau hiérarchique inférieur au niveau prédéterminé.

Selon une autre caractéristique, le procédé consiste à mettre en oeuvre un module de chargement connectable au module de niveau hiérarchique le plus élevé dans le réseau, ce module contenant des clés de base enregistrées par un organisme habilité, ces clés de base correspondant aux clés prédéterminées d'exploitation à acheminer, ainsi qu'aux clés diversifiées servant à la transmission chiffrée de chaque clé secrète prédéterminée d'exploitation, ce module de chargement contenant au moins un algorithme de diversification de clés de base et au moins un algorithme de chiffrement de clés de base ou de clés diversifiées à transmettre vers les modules du réseau pour l'acheminement des clés d'exploitation.

Selon une autre caractéristique, des clés diversifiées sont préenregistrées respectivement dans les modules et dans les cartes par un organisme habilité avant l'utilisation des modules et des cartes dans le réseau.

Selon une autre caractéristique, le procédé consiste à chiffrer par un algorithme de chiffrement contenu dans le module de chargement, une première clé prédéterminée de base d'exploitation de prestation de service enregistrée dans ce module de chargement, cette première clé chiffrée étant transmise du module de chargement au module de sécurité de l'unité centrale où elle est déchiffrée par un algorithme inverse de l'algorithme de chiffrement, cette première clé étant à nouveau chiffrée par un algorithme de chiffrement contenu dans le module de sécurité de l'unité centrale pour être transmise au module de sécurité du terminal où elle est déchiffrée par un algorithme inverse de l'algorithme de chiffrement, cette première clé étant diversifiée et chiffrée dans le module de sécurité de l'unité centrale, par des algorithmes de diversification et de chiffrement contenus dans le module de l'unité centrale, pour être transmise à la carte utilisateur où elle est déchiffrée par un algorithme inverse de l'algorithme de chiffrement.

Selon une autre caractéristique, l'algorithme de chiffrement de la première clé d'exploitation transmise du module de chargement au module de sécurité de l'unité centrale fait intervenir la clé de base de cette première clé, ainsi qu'une première clé de transport diversifiée obtenue par un algorithme de diversification contenu dans le module de chargement et faisant intervenir une clé de base de cette première clé de transport contenue dans le module de chargement, ainsi que des informations de diversification provenant du module de sécurité de l'unité centrale.

Selon une autre caractéristique, l'algorithme de chiffrement de la première clé chiffrée transmise du module de sécurité de l'unité centrale au module de sécurité du terminal fait intervenir cette première clé contenue dans le module de sécurité de l'unité centrale, ainsi qu'une clé diversifiée de communication enregistrée dans le module de sécurité du terminal et calculée dans le module de sécurité de l'unité centrale, par un algorithme de diversification faisant intervenir la clé de base de cette clé diversifiée de communication enregistrée dans le module de sécurité de l'unité centrale, ainsi que des informations de diversification provenant du module de sécurité du terminal.

Selon une autre caractéristique, la clé de base de communication enregistrée dans le module de sécurité de l'unité centrale est transmise sous forme chiffrée du module de chargement au module de sécurité de l'unité centrale, le chiffrement de cette clé de communication utilisant un algorithme de chiffrement contenu dans le module de chargement et faisant intervenir la clé de base contenue dans le module de chargement, ainsi que la première clé diversifiée de transport calculée dans le module de chargement, la clé diversifiée de communication à enregistrer dans le module de sécurité du terminal étant transmise du module de chargement au module de sécurité du terminal, sous forme diversifiée et chiffrée, la diversification de cette clé utilisant un algorithme de diversification du module de chargement faisant intervenir la clé de base de communication contenue dans le module de chargement, ainsi que des information de diversification provenant du module de sécurité du terminal, le chiffrement de cette clé diversifiée de communication utilisant un algorithme de chiffrement faisant intervenir la clé diversifiée de communication, ainsi qu'une deuxième clé diversifiée de transport obtenue par un algorithme de diversification contenu dans le module de chargement et faisant intervenir la clé de base de cette deuxième clé de transport contenue dans le module de chargement, ainsi que des informations de diversification provenant du module de sécurité du terminal.

Selon une autre caractéristique, l'algorithme de diversification contenu dans le module de sécurité de l'unité centrale pour diversifier une clé d'exploitation à transmettre à la carte utilisateur, fait intervenir la clé de base de cette clé d'exploitation contenue dans ce module de sécurité, ainsi que des informations de diversification provenant de la carte utilisateur, le chiffrement de la clé diversifiée d'exploitation étant obtenu par un algorithme contenu dans le module de sécurité de l'unité centrale et faisant intervenir la clé d'exploitation diversifiée ainsi qu'une clé diversifiée d'ouverture enregistrée dans la carte utilisateur et calculée dans le module de sécurité de l'unité centrale par un algorithme de diversification faisant intervenir une clé de base de cette clé d'ouverture, enregistrée dans le module de sécurité de l'unité centrale, ainsi que des informations de diversification provenant de la carte utilisateur.

Selon une autre caractéristique, la clé de base d'ouverture enregistrée dans le module de sécurité de l'unité centrale est transmise sous forme chiffrée par le module de chargement, le chiffrement de cette clé de base étant obtenu par un algorithme de chiffrement contenu dans le module de chargement, et utilisant ladite première clé diversifiée de transport.

Selon une autre caractéristique, la clé diversifiée d'ouverture enregistrée dans la carte utilisateur, est transmise à la carte utilisateur sous forme chiffrée par le module de sécurité de l'unité centrale, le chiffrement de cette clé diversifiée d'ouverture utilisant un algorithme de chiffrement contenu dans le module de sécurité de l'unité centrale et faisant intervenir cette clé d'ouverture diversifiée ainsi qu'une clé de fabrication diversifiée préenregistrée dans la carte et calculée par le module de sécurité de l'unité centrale à partir d'une clé de fabrication de base.

Selon une autre caractéristique, la clé de base des clés de fabrication diversifiées préenregistrées dans les cartes usagers, est transmise au module de sécurité de l'unité centrale, sous forme chiffrée, le module de chargement contenant un algorithme de chiffrement faisant intervenir cette clé de base des clés diversifiées préenregistrées ainsi que la première clé de transport calculée par le module de chargement, et présente dans le module de sécurité de l'unité centrale.

Selon une autre caractéristique, les première et deuxième clés de transport diversifiées sont respectivement préenregistrées dans le module de sécurité de l'unité centrale et dans le module de sécurité du terminal.

Les caractéristiques et avantages de l'invention ressortiront mieux de la description qui va suivre, faite en référence aux dessins annexés dans lesquels :

- la figure 1 représente schématiquement et en exemple, un réseau dans lequel est mis en oeuvre le procédé de l'invention,
- la figure 2 représente schématiquement les opérations de préchargement d'une clé diversifiée de transport assurant la communication entre un module de chargement MCH et des modules de sécurité qui seront ultérieurement affectés au réseau,
- la figure 3 représente schématiquement les opérations de préchargement dans un module du réseau d'une clé de communication CX diversifiée en CXd, dans un autre module pour le transfert de clés d'exploitation d'une prestation de service, d'un module à un autre,
- la figure 4 représente schématiquement les opérations de chargement d'une clé CP de prestation de service dans les modules du réseau,
- la figure 5 représente schématiquement les opérations de chargement et de diversification d'une clé CPd de prestation de service, dans le module du réseau qui présente la hiérarchie la plus faible (la carte utilisateur par exemple),
- la figure 6 représente schématiquement les opérations de chargement d'une clé d'ouverture CO dans des modules de sécurité qui seront affectés à des unités centrales MSC1 à partir d'un module de chargement MCH,
- la figure 7 représente schématiquement les opérations de chargement de la clé d'ouverture CO diversifiée dans un module de niveau hiérarchique le plus faible (carte) à l'aide d'une clé de fabrication CF préenregistrée dans la carte sous forme diversifiée et chargée dans le module MSC1 par le module de chargement pour assurer le chiffrement de la clé d'ouverture à transmettre sous sa forme diversifiée.

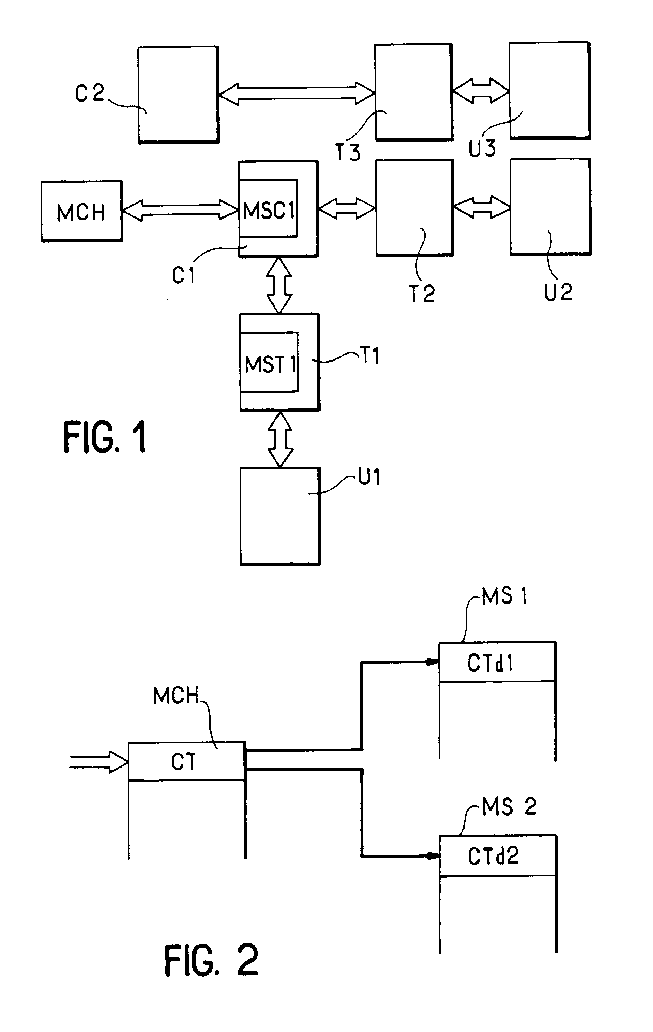

Le réseau représenté en exemple sur la figure 1, comporte par exemple, dans un ensemble de traitement d'informations, une unité centrale C1 reliée à des terminaux T1, T2 auxquels peuvent être connectées des cartes utilisateurs tels que U1 ou U2. Bien entendu, l'ensemble de traitement peut comporter une ou plusieurs autres unités centrales telles que C2, d'autres terminaux tels que T3, et d'autres cartes telles que U3, qui dans l'exemple de mise en oeuvre du procédé de l'invention n'appartiennent pas au réseau considéré, mais pourraient éventuellement lui appartenir.

De façon connue, le terminal T1 comporte un module MST1 de sécurité qui ne sera pas décrit ici en détail, et qui comprend notamment une mémoire et des circuits de traitements, tels qu'un microprocesseur par exemple, réalisés sous forme monolithique. Ce module de sécurité permet d'enregistrer des clés secrètes permettant par exemple d'identifier par des algorithmes appropriés la carte utilisateur ; ce module permet aussi de chiffrer par des algorithmes de chiffrement, des informations qui sont fournies à la carte U1, ou à l'unité centrale C1. Ces algorithmes sont d'ailleurs réversibles pour permettre de la même manière de déchiffrer des informations ou des clés qui proviennent de l'unité centrale C1 ou d'un terminal T2 ou d'une carte U1. Un type de microprocesseur monolithique utilisé peut être tel que celui décrit dans la demande de brevet FR-A-2 536 880.

L'unité centrale C1 possède aussi un module de sécurité MSC1 ayant un fonctionnement et une structure comparables à ceux du module de sécurité MST1 du terminal T1. Les informations circulant entre le terminal T1 et la carte U1 sont chiffrées ; il en est de même des informations circulant entre le terminal T1 et l'unité centrale C1 qui sont chiffrées par des algorithmes réversibles appropriés. Ce module de sécurité contient notamment des algorithmes de diversification et de chiffrement de clés transmises au module de sécurité MST1 du terminal ou à la carte U1.

La carte utilisateur (U1 ou U2 sur la figure 1) possède des fonctions de mémorisation et de traitement, et constitue également un module de sécurité comparable à celui de l'unité centrale.

On considère que, dans un réseau, une unité centrale en l'occurrence C1 et son module de sécurité associé MSC1 possèdent dans ce réseau le niveau hiérarchique le plus élevé en fonction de la puissance de traitement de cette unité. Les terminaux et leurs modules de sécurité associés ont des niveaux hiérarchiques inférieurs au niveau hiérarchique prédéterminé de l'unité centrale, ces niveaux sont eux-mêmes supérieurs aux niveaux hiérarchiques des cartes qui sont les plus bas du réseau.

Lorsque le réseau est utilisé pour une prestation de service prédéterminée, des clés de prestation de service sont enregistrées dans les modules de sécurité de l'unité centrale et certaines voir d'autres sont enregistrées dans le terminal considéré. Ces clés sont diversifiées dans la carte utilisateur et permettent à cet utilisateur d'accéder au service prédéterminé, par connexion de la carte au terminal, après enregistrement dans cette carte, d'au moins une clé de prestataire diversifiée.

Comme indiqué plus haut, selon l'état de la technique, lorsque l'utilisateur d'une carte souhaite accéder à une prestation de service qui n'était pas prévue au moment où la carte lui a été confiée, il est nécessaire que cet utilisateur renvoie la carte à un centre habilité pour que ce centre introduise dans cette carte la ou les clés de prestation de service diversifiées correspondant à la prestation de service souhaitée. Le centre habilité, après avoir introduit ces clés diversifiées dans la carte renvoie la carte à l'utilisateur qui peut alors l'utiliser pour ce nouveau service, mais après avoir été privé de sa carte et en encourant les risques mentionnés plus haut. Les modules de sécurité de l'unité centrale et du terminal doivent aussi être renvoyés au centre habilité pour être chargés par des clés de prestation de service correspondant à une nouvelle prestation de service, offerte dans le réseau, si celle-ci n'était pas déjà implantée dans ce réseau.

Selon le procédé de l'invention, il n'est plus nécessaire, lorsque l'on souhaite implanter une prestation de service dans un réseau existant, de renvoyer les modules de sécurité de ce réseau ainsi que les cartes des utilisateurs souhaitant bénéficier de ce service, vers un centre habilité enregistrant dans ces modules et ces cartes des clés secrètes de prestation de service. Lorsque la prestation de service existe déjà dans le réseau, il n'est pas nécessaire de renvoyer vers un centre habilité les cartes pour lesquelles l'accès à ce service est souhaité.

Le procédé de l'invention va maintenant être décrit en détail, en supposant que l'on souhaite implanter une nouvelle prestation de service dans un réseau et que l'on souhaite aussi donner accès à cette nouvelle prestation, à des cartes utilisateurs pour lesquelles cet accès n'était pas prévu.

Le procédé de l'invention consiste à utiliser un module MCH de chargement de clés, relié au module de sécurité MSC1 de l'unité centrale C1 du réseau considéré. Ce module de chargement contient les clés de base nécessaires à la mise en oeuvre du procédé. Ces clés sont chargées dans ce module par l'organisme habilité. Le module MCH permet de charger dans le module de sécurité de l'unité centrale au moins une clé CP de prestation de service qui est enregistrée sous forme diversifiée CPd uniquement dans le module de sécurité ayant dans le réseau la hiérarchie la plus faible (la carte utilisateur par exemple).

La clé de prestation de service CP qui est fournie par le module MCH de chargement est transmise de ce module de chargement au module de sécurité MSC1 de l'unité centrale C1, puis au module de sécurité MST1 du terminal de façon chiffrée par des clés de transport diversifiées (CTd1, CXd). Elle est transmise sous forme diversifiée puis chiffrée par une autre clé de transport également diversifiée (COd) du module de sécurité de l'unité centrale à la carte utilisateur.

Le résultat CPc1 du chiffrement de la clé CP de prestation de service, pour sa transmission du module de chargement MCH, au module de sécurité MSC1 de l'unité centrale, utilise notamment une clé de transport diversifiée CTd1 établissant la hiérarchie dans la communication entre les deux modules MCH et MSC1. Les résultats CPc2 du chiffrement de la clé CP, pour sa transmission du module de sécurité MSC1 de l'unité centrale au module de sécurité MST1 du terminal, utilise notamment une clé de communication diversifiée CXd établissant une autre hiérarchie dans la communication entre les deux modules MSC1, MST1. La clé CP est diversifiée et chiffrée en CPdc pour être transmise du module de sécurité MSC1 de l'unité centrale à la carte utilisateur U1. Ce chiffrement utilise notamment une clé diversifiée d'ouverture de prestation de service COd. La diversification et le chiffrement des différentes clés utilisent des algorithmes spécifiques qui seront décrits plus loin en détail.

Les clés de transport CTd1 et CTd2 diversifiées correspondent à au moins une clé de base CT contenue dans le module de chargement. CTd2 est la clé de transport diversifiée établissant la hiérarchie dans la communication entre les modules de chargement MCH et du terminal MST1. De la même manière, les clés diversifiées de communication CXd et d'ouverture COd correspondent respectivement à des clés de base CX, CO, contenues dans le module de chargement et chargées dans ce module par l'organisme habilité, dans l'environnement sécuritaire requis.

Les figures suivantes permettent de mieux comprendre la mise en oeuvre du procédé de l'invention et notamment les différentes opérations de chargement de clés effectuées à partir du module de chargement MCH, ainsi que les opérations de transfert, de chiffrement et de diversification effectuées au cours de cette mise en oeuvre.

Ces opérations comprennent, pour la mise en place de moyens de communication hiérarchisés :
Une étape d'initialisation permettant la mise en place des moyens de communication CT entre le module de chargement MCH d'une part et les modules de sécurité MSC, MST des unités centrales C ou des terminaux T ;
Une étape d'installation des moyens de communication CX entre les modules de sécurité MSC des unités centrales et MST des terminaux.
Une autre étape d'installation des moyens de communication par une clé CO d'ouverture entre les modules de sécurité des unités centrales MSC et des cartes usager. Par la suite, ces moyens seront exploités pour la mise en place d'une prestation dans le réseau par l'insertion sécurisée d'au moins une clé de base de prestation de service CP.

La figure 2 représente schématiquement le chargement des clés diversifiées de transport CTd1 et CTd2 de l'étape d'initialisation qui sont chargées par l'organisme habilité, dans les modules de sécurité, à partir d'une clé de transport de base CT, contenue dans le module de chargement MCH. Ces clés diversifiées sont chargées dans les modules de sécurité avant la mise en place de ces modules dans le réseau. Chaque flèche entrant dans le module de chargement MCH représente l'introduction en clair des clés qu'elles pointent. Les flèches sortant du module de chargement ou des autres modules représentent la transmission chiffrée des clés éventuellement diversifiées situées en vis-à-vis de ces flèches.

Les clés de transport diversifiées CTd1 et CTd2 sont obtenues grâce à un algorithme fA de diversification contenu dans le module de chargement MCH. Cet algorithme fait intervenir de façon connue, la clé de transport de base CT contenue dans le module de chargement, ainsi que des informations de diversifications provenant des modules de sécurité MS1, MS2 qui ultérieurement pourront être affectés à une unité centrale ou un terminal. Ces informations de diversification sont bien entendu fournies au module de chargement. L'algorithme de diversification est par exemple du type décrit dans la demande de brevet européen EP-A 0 253 722 précitée.

Il en résulte que l'on peut écrire :

CTd1 = fA (CT, informations de diversification de MS1), et
CTd2 = fA (CT, informations de diversification de MS2).

Les clés de transport diversifiées CTd1 et CTd2, ainsi enregistrées respectivement dans les modules de sécurité MS1, MS2, vont permettre, comme on le verra plus loin en détail, d'établir des transmissions sécurisées de clés chiffrées entre le module de chargement MCH et les modules de sécurité MS1 et MS2.

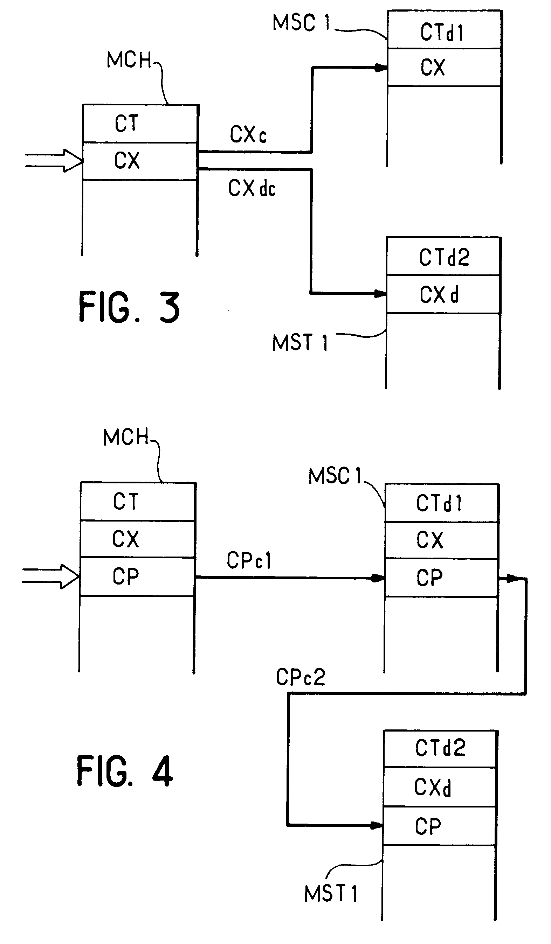

L'étape suivante qui est représentée sur la figure 3 consiste à hiérarchiser entre eux les différents modules de sécurité en fonction de leur destination aux unités centrales ou aux terminaux en enregistrant dans ceux-ci des clés de communication hiérarchisée qui permettront ou empêcheront les communications selon qu'ils disposeront ou non de clés correspondantes.

Dès lors un module MS1 attribué à une unité centrale C1 deviendra un module de sécurité d'unité centrale MSC1 et de même un module MS2 attribué à un terminal T1 deviendra un module de sécurité de terminal MST1. Ces buts sont atteints grâce à l'introduction de la clé de base CX dite de communication hiérarchisée dans le module de chargement MCH.

La clé CX est enregistrée non diversifiée dans le module de sécurité MSC1. Sa transmission entre MCH et MSC1 est effectuée sous forme chiffrée (CXc sur la figure 3). Le chiffrement de la clé CX est obtenu à partir d'un algorithme de chiffrement fA du module de chargement, qui fait intervenir la clé CX, ainsi que la clé diversifiée de transport CTd1, qui est au préalable calculée par le module de chargement.

On peut ainsi écrire :

CTd1 = fA (CT, informations de diversification de MSC1).
et CXc = fA (CTd1, CX)

La clé CXc est déchiffrée (CX) par le module de sécurité MSC1 grâce à un algorithme inverse de l'algorithme de chiffrement, puisque ce module contient déjà la clé diversifiée de transport CTd1. Bien entendu, l'algorithme fA de chiffrement de la clé CX peut être différent de l'algorithme fA de diversification de la clé CT.

La clé CX est enregistrée diversifiée (CXd) dans le module de sécurité MST1 du terminal. Cette clé CXd est obtenue à partir de la clé de communication CX du module MCH. Elle est transmise sous forme diversifiée et chiffrée (CXdc) du module MCH au module MST1.

La diversification (CXd) de la clé CX est obtenue grâce à un algorithme de diversification fB du module de chargement MCH faisant intervenir la clé CX, ainsi que des informations de diversification provenant du module de sécurité MST1 du terminal.

On peut ainsi écrire :

CXd = fB (CX, informations de diversification de MST1).

La hiérarchie s'établit donc entre les modules MSC1 et MST1 par les clés CX et CXd mais chaque clé CX, CXd a été fournie par le module de chargement MCH.

Le chiffrement (CXdc) de la clé CXd pour la transmission de cette clé diversifiée de communication entre le module de chargement MCH et le module de sécurité MST1 est obtenu grâce à un algorithme fA de chiffrement contenu dans le module de chargement MCH et qui fait intervenir la clé diversifiée de transport CTd2, ainsi que la clé diversifiée CXd calculée dans le module de chargement MCH.

Le module de chargement calcule donc :

CTd2 = fA (CT, informations de diversification de MST1),

puis CXdc = fA (CTd2, CXd).

La clé diversifiée et chiffrée CXdc est déchiffrée (CXd), dans le module de sécurité MST1, par un algorithme inverse de l'algorithme de chiffrement, ce module contenant déjà la clé de transport diversifiée CTd2. Dans le cas où un ou plusieurs modules de sécurité d'unité centrale MSC1 sont autorisés à délivrer de nouveaux services aux usagers détenteurs de cartes U1 dans le réseau, il est nécessaire d'implanter dans ces modules MSC1 des clés d'ouverture CO permettant d'établir un moyen de communication hiérarchisé entre les modules MSC1 du prestataire de service et les cartes utilisateurs U1.

Pour cela il est nécessaire de mettre en place dans chaque module central MSC1 une clé d'ouverture CO et d'avoir mis en place dans les cartes au moins une clé d'ouverture diversifiée COd, dans une phase préalable à la mise en service de chaque carte. Cette phase préalable peut être exécutée de façon indépendante de la phase de sécurisation du réseau qui correspond à la mise en place dans le réseau des clés CT, CX et CO et de préférence, peut être effectuée hors du réseau d'exploitation.

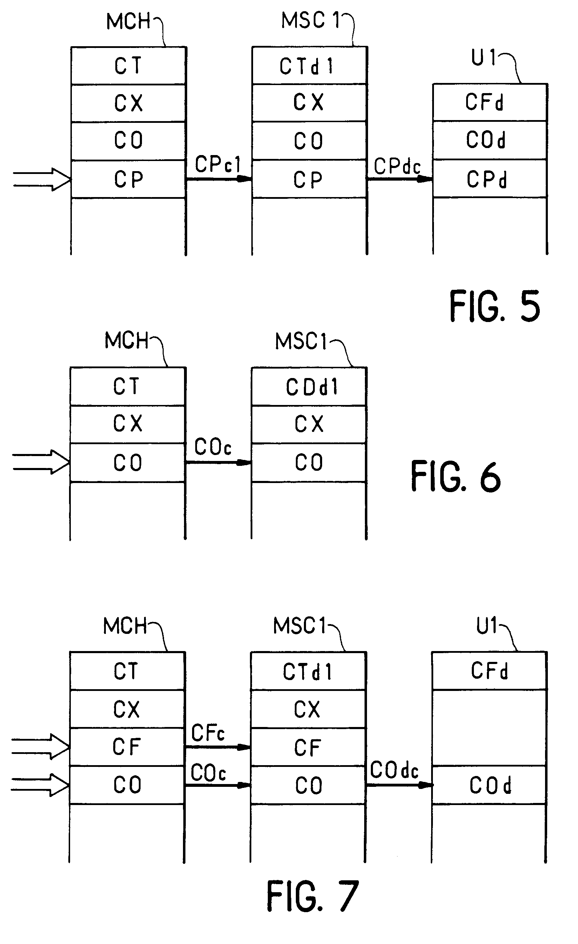

La mise en place de la clé CO s'effectue de la manière suivante :
La clé CO chargée par l'organisme habilité dans le module de chargement MCH est transmise comme représenté figure 6 sous forme chiffrée (COc) au module de sécurité MSC1 de l'unité centrale. Ce chiffrement est obtenu grâce à un algorithme de chiffrement fA contenu dans le module de chargement MCH et qui fait intervenir la clé de transport diversifiée CTd1 contenue dans le module de sécurité MSC1, ainsi que la clé CO. Pour cela le module de chargement calculé, comme indiqué plus haut :

CTd1 = fA (CT, informations de diversification de MSC1),

puis COc = fA (CTd1, CO).

La clé COc est déchiffrée (CO) par un algorithme inverse dans le module de sécurité MSC1, puisque la clé de transport diversifiée CTd1 est déjà enregistrée dans ce module.

La mise en place préalable de la clé d'ouverture diversifiée COd dans les cartes s'effectue de la manière suivante :
La clé d'ouverture diversifiée COd est enregistrée dans la carte utilisateur U1 et son transfert du module d'unité centrale MSC1, à la carte U1, est effectué sous forme chiffrée COdc comme représenté figure 7.

Le module MSC1 de la figure 7 est un module de sécurité d'unité centrale qui peut uniquement être utilisé pour le chargement préalable ou ultérieurement être utilisé comme module central du réseau.

Le chiffrement COdc de la clé d'ouverture diversifiée COd est assuré grâce à un algorithme de chiffrement fB contenu dans le module MSC1 et qui fait intervenir la clé diversifiée COd, ainsi qu'une clé diversifiée CFd, dite de fabrication, déjà enregistrée dans la carte, à sa fabrication ; cette clé CFd caractérise la carte.

On peut écrire COdc = fB (COd, CFd).

COd est calculée par le module de sécurité d'unité centrale MSC1 en utilisant la clé d'ouverture CO selon la formule :

COd = fB (CO, informations de diversification de U1)

Ceci nécessite au préalable le calcul de la clé CFd par le module MSC1. A cet effet, la clé de base CF de fabrication, introduite par l'organisme habilité, dans le module de chargement MCH, est transférée sous forme chiffrée CFc au module de sécurité MSC1 de l'unité centrale. Ce chiffrement de la clé CF est obtenu grâce à un algorithme fA du module de chargement, qui fait intervenir la clé CF, ainsi que la clé CTd diversifiée de transport.

Le module de chargement calcule donc tout d'abord :

CTd1 = fA (CT, informations de diversification de MSC1)

puis CFc = fA (CTd1, CF)

Cette clé chiffrée transmise au module MSC1 est déchiffrée par un algorithme inverse, puisque MSC1 contient déjà la clé de transport diversifiée CTd1.

Le module MSC1 peut alors calculer par l'algorithme de diversification fB la clé diversifiée CFd de fabrication, cet algorithme faisant intervenir la clé de base CF contenue dans le module de sécurité MSC1, ainsi que des informations de diversification provenant de la carte U1. On peut écrire :

CFd = fB (CF, informations de diversification de U1).

C'est après ce dernier calcul que peut être calculé, comme indiqué plus haut, par le module MSC1, la clé diversifiée et chiffrée d'ouverture COdc = fB (COd, CFd), qui est transférée vers la carte U1, où elle est déchiffrée (COd), car la carte contient déjà la clé CFd, depuis sa fabrication. Bien entendu l'algorithme fB de diversification des clés CX et CF, peut être différent de l'algorithme fB de chiffrement des clés CF et COd. Il est bien évident que dans le cas où on ne choisirait pas de charger préalablement les clés d'ouverture diversifiées COd sur les cartes, mais de les charger par le réseau installé, on commencerait par mettre en place par le module de sécurité d'unité centrale du réseau MSC1 la clé CF puis la clé CO et la clé diversifiée COd. Dans ce cas, une clé de fabrication diversifiée CFd est préalablement introduite dans la carte.

L'étape suivante représentée sur la figure 4 consiste à implanter une prestation de service dans le réseau ainsi mis en place qui comporte les modules de sécurité MSC1 et MST1 et pour lequel les étapes précédentes ont rendu possibles les communications entre le module de chargement MCH et les modules de sécurité MSC1 ou MST1, et entre le module de sécurité MSC1 de l'unité centrale et le module de sécurité MST1 du terminal.

Cette insertion d'une prestation de service consiste à utiliser au moins une clé CP de prestation de service préalablement enregistrée dans le module de chargement MCH par un organisme habilité. Cette clé pourra, comme on va le voir, être transmise aux modules MSC1 et MST1. Elle sera ensuite enregistrée sous forme diversifiée CPd, dans la carte utilisateur U1 qui aura dès lors accès à ce service.

La clé de prestation de service CP est transmise sous forme chiffrée (CPc1) au module de sécurité MSC1.

Le chiffrement de la clé CP est obtenu grâce à un algorithme fA du module de chargement MCH faisant intervenir la clé diversifiée de transport CTd1 calculée par MCH sur la base des informations de diversification fournies par MSC1, ainsi que la clé CP. Pour cela le module de chargement calcule d'abord la clé diversifiée de transport CTd1 :

CTd1 = fA (CT, informations de diversification de MSC1),

puis calcule :

CPc1 = fA (CTd1, CP).

La clé chiffrée CPc1, reçue par le module de sécurité MSC1 est déchiffrée par un algorithme inverse, puisque ce module contient déjà la clé diversifiée CTd1.

Ensuite, la clé CP de prestation de service est transmise sous forme chiffrée (CPc2) du module de sécurité MSC1 de l'unité centrale, au module de sécurité MST1 du terminal. Ce chiffrement est obtenu grâce à un algorithme de chiffrement fB contenu dans le module de sécurité MSC1 et faisant intervenir la clé diversifiée de communication CXd calculée par MSC1 sur la base des informations de diversification fournies par MST1 ainsi que la clé CP. Le module de sécurité MSC1 calcule donc :

CXd = fB (CX, informations de diversification de MST1).

puis CPc2 = fB (CXd, CP).

Bien entendu, un algorithme inverse contenu dans le module de sécurité MST1 permet de déduire CP à partir de CPc2, puisque ce module contient déjà la clé diversifiée de communication CXd.

Il est évident que toute transmission d'une clé exige une authentification préalable du destinataire par l'émetteur. Cette authentification est connue, par exemple, d'après la demande de brevet européen précité.

A la fin de cette opération, on peut considérer que la prestation de service est maintenant implantée dans un réseau comprenant une seule unité centrale et un seul terminal mais on procéderait de façon identique dans le cas d'un réseau ayant un central et plusieurs terminaux ou plusieurs centraux hiérarchisés avec chacun plusieurs terminaux. Par contre à ce stade la carte utilisateur n'a pas encore accès à cette prestation.

L'opération suivante, représentée sur la figure 5, va consister à fournir à la carte utilisateur U1, les clés nécessaires à son exploitation dans le réseau pour la prestation de service considérée, et notamment la clé diversifiée CPd issue de la clé CP.

Pour cela, on utilise le moyen de communication instauré par la clé d'ouverture CO et ses clés diversifiées COd, dédiées aux cartes utilisateur U1. La transmission chiffrée (CPdc) de la clé diversifiée CPd de prestation de service, du module de sécurité MSC1 de l'unité centrale, à la carte utilisateur U1, ne passe pas par le module de sécurité MST1 du terminal pour accroître la sécurité. Dans cette opération, le module de sécurité MST1 du terminal est transparent, puisque la carte est connectée au terminal et que le module MST1 n'intervient pas.

La clé de prestation de service CP va être enregistrée dans la carte utilisateur U1, sous forme diversifiée (CPd), comme le montre la figure 5.

Comme indiqué plus haut, la clé CP est enregistrée dans le module de chargement MCH par l'organisme habilité. Elle est ensuite transmise au module de sécurité MSC1 de l'unité centrale sous forme chiffrée (CPc1), où elle est déchiffrée (CP) puis enregistrée sous sa forme non chiffrée (CP).

La clé CP va être maintenant diversifiée et chiffrée (CPdc) pour être transmise du module de sécurité MSC1 à la carte utilisateur U1 où elle est déchiffrée (CPd) et enregistrée.

La diversification (CPd) de la clé CP est obtenue grâce à un algorithme fB du module de sécurité MSC1, qui fait intervenir la clé CP, ainsi que des informations de diversification provenant de la carte utilisateur U1.

On peut écrire :

CPd = fB (CP, informations de diversification de U1).

Cet algorithme fB peut être différent de l'algorithme fB mentionné plus haut.

Le chiffrement (CPdc) de la clé CPd est obtenu grâce à un algorithme fB du module de sécurité, qui fait intervenir la clé d'ouverture diversifiée COd, et la clé diversifiée de prestation de service CPd, calculée comme indiqué plus haut.

La clé diversifiée d'ouverture COd est obtenue grâce à un algorithme de diversification fB, du module de sécurité MSC1 de l'unité centrale.

Cet algorithme fait intervenir la clé de base CO d'ouverture, fournie par le module de chargement, ainsi que des informations de diversification fournies par la carte utilisateur U1.

On peut écrire :

COd = fB (CO, informations de diversification de U1)

puis CPdc = fB (COd, CPd).

Cette clé diversifiée et chiffrée CPdc, de prestation de service, peut être déchiffrée dans la carte, par un algorithme inverse de l'algorithme de chiffrement, puisque la carte contient maintenant la clé d'ouverture diversifiée COd.

Désormais, le titulaire de la carte peut bénéficier de cette nouvelle prestation de service.

Dans la description de l'invention, on pourrait considérer que le module de sécurité MSC1 du réseau contient déjà la clé CP relative à la prestation de service souhaitée et que le procédé consiste alors à donner à des cartes l'accès à cette prestation de service déjà implantée. Le procédé consisterait alors seulement à transmettre la clé CPd à la carte, bien entendu en utilisant les clés nécessaires à cette transmission.

Dans l'exposé de l'invention on a établi une distinction entre d'une part l'algorithme fA qui est un algorithme spécifique à la fonction de transport et qui doit se trouver dans les modules MSC, MCH, MST et d'autre part l'algorithme fB qui est propre à l'application contenue par les cartes "usager" exploitées par le système. Toutefois, il est évident que l'on peut envisager d'utiliser un seul et même algorithme pour mettre en oeuvre l'invention ou d'associer à chaque clé et/ou chaque fonction de chiffrement et de diversification un algorithme différent qui devra dans ce cas être disponible dans les modules où il sera nécessaire.

L'invention ne s'applique pas seulement aux modes de mise en oeuvre décrits, mais elle s'étend évidemment à tous les équivalents à la portée de l'homme du métier.

**Revendications**

1. Procédé pour acheminer au moins une clé secrète (CP) prédéterminée, dans le but de sécuriser l'exploitation d'une prestation de service, d'un module de sécurité (MSC1) d'une unité centrale (C1) d'un réseau d'exploitation de service vers un autre module de sécurité (MST1) d'un terminal (T1) de ce réseau, ou une des cartes utilisateurs (U1) connectables au terminal (T1) et constituant elles-mêmes des modules de sécurité, caractérisé en ce qu'il consiste à transmettre une clé (CPd) d'exploitation prédéterminée sous forme chiffrée, d'un module de sécurité (MSC1) présentant un niveau hiérarchique prédéterminé vers un module de sécurité (MST1) ou une carte (U1) de niveau hiérarchique inférieur au niveau prédéterminé, ce chiffrement consistant à utiliser un algorithme de chiffrement contenu dans le module de niveau hiérarchique prédéterminé et faisant intervenir la clé d'exploitation prédéterminée ainsi qu'au moins une clé de transport (CTd; CXd; COd) diversifiée enregistrée dans le module de niveau hiérarchique inférieur au niveau prédéterminé, cette clé de transport diversifiée nécessaire au chiffrement est obtenue par un algorithme de diversification contenu dans le module de niveau hiérarchique prédéterminé et faisant intervenir une clé de base (CT) de cette clé de transport diversifiée, ainsi que des informations de diversification provenant du module de niveau hiérarchique inférieur, la clé prédéterminée (CPd) chiffrée d'exploitation étant déchiffrée en mettant en oeuvre, dans le module de niveau hiérarchique inférieur au niveau prédéterminé, un algorithme de déchiffrement, inverse de l'algorithme de chiffrement.

2. Procédé selon la revendication 1, caractérisé en ce que toute clé diversifiée (CPd) transmise d'un module de niveau hiérachique prédéterminé à un module de niveau hiérarchique inférieur pour y être enregistrée, est chiffrée, le procédé consistant à mettre en oeuvre un algorithme de chiffrement contenu dans le module de niveau hiérarchique prédéterminé et faisant intervenir la clé d'exploitation diversifiée (CPd) à transmettre, ainsi qu'une clé diversifiée de transport (CTd; CXd; COd) calculée par l'algorithme de diversification contenu dans le module de niveau hiérarchique prédéterminé et enregistrée dans le module de niveau hiérarchique inférieur au niveau prédéterminé, la clé diversifiée (CPd) ainsi chiffrée étant déchiffrée par un algorithme inverse de l'algorithme de chiffrement, contenu dans le module de niveau hiérarchique inférieur au niveau prédéterminé.

3. Procédé selon la revendication 2, caractérisé en ce qu'il consiste à mettre en oeuvre un module de chargement (MCH) connectable au module de niveau hiérarchique le plus élevé dans le réseau, ce module contenant des clés de base enregistrées par un organisme habilité, ces clés de base correspondant aux clés prédéterminées d'exploitation (CPd) à acheminer, ainsi qu'aux clés diversifiées servant à la transmission chiffrée de chaque clé secrète prédéterminée d'exploitation, ce module de chargement contenant au moins un algorithme de diversification de clés de base et au moins un algorithme de chiffrement de clés de base ou de clés diversifiées à transmettre vers les modules du réseau pour l'acheminement des clés d'exploitations.

4. Procédé selon la revendication 3, caractérisé en ce que des clés diversifiées sont préenregistrées respectivement dans les modules et dans les cartes par un organisme habilité avant l'utilisation des modules et des cartes dans le réseau.

5. Procédé selon la revendication 4, caractérisé en qu'il consiste à chiffrer (CPc1) par un algorithme de chiffrement contenu dans le module de chargement (MCH), une première clé prédéterminée de base (CP) d'exploitation de prestation de service enregistrée dans ce module de chargement, cette première clé chiffrée (CPc1) étant transmise du module de chargement (MCH) au module de sécurité (MSC1) de l'unité centrale où elle est déchiffrée (CP) par un algorithme inverse de l'algorithme de chiffrement, cette première clé (CP) étant à nouveau chiffrée (CPc2) par un algorithme de chiffrement contenu dans le module de sécurité (MSC1) de l'unité centrale pour être transmise au module de sécurité (MST1) du terminal où elle est déchiffrée par un algorithme inverse de l'algorithme de chiffrement, cette première clé étant diversifiée et chiffrée (CPdc) dans le module de sécurité de l'unité centrale, par des algorithmes de diversification (CPd) et de chiffrement (CPdc) contenus dans le module de l'unité centrale, pour être transmise à la carte utilisateur où elle est déchiffrée par un algorithme inverse de l'algorithme de chiffrement.

6. Procédé selon la revendication 5, caractérisé en ce que l'algorithme de chiffrement de la première clé d'exploitation transmise (CPc1) du module de chargement (MCH) au module de sécurité (MSC1) de l'unité centrale fait intervenir la clé de base (CP) de cette première clé, ainsi qu'une première clé de transport diversifiée (CTd) obtenue par un algorithme de diversification contenu dans le module de chargement et faisant intervenir une clé de base (CT) de cette première clé de transport contenue dans le module de chargement, ainsi que des informations de diversification provenant du module de sécurité (MSC1) de l'unité centrale.

7. Procédé selon la revendication 5, caractérisé en ce que l'algorithme de chiffrement de la première clé chiffrée (CPc2) transmise du module de sécurité (MSC1) de l'unité centrale au module de sécurité (MST) du terminal fait intervenir cette première clé (CP) contenue dans le module de sécurité (MSC1) de l'unité centrale, ainsi qu'une clé diversifiée de communication (CXd) enregistrée dans le module de sécurité (MST1) du terminal et calculée dans le module de sécurité de l'unité centrale, par un algorithme de diversification faisant intervenir la clé de base (CX) de cette clé diversifiée de communication enregistrée dans le module de sécurité (MSC1) de l'unité centrale, ainsi que des informations de diversification provenant du module de sécurité (MST1) du terminal.

8. Procédé selon la revendication 7, caractérisé en ce que la clé de base de communication (CX) enregistrée dans le module de sécurité (MSC1) de l'unité centrale est transmise sous forme chiffrée (CXc) du module de chargement (MCH) au module de sécurité de l'unité centrale, le chiffrement de cette clé de communication utilisant un algorithme de chiffrement contenu dans le module de chargement et faisant intervenir la clé de base (CX) contenue dans le module de chargement, ainsi que la première clé diversifiée de transport (CTd1) calculée dans le module de chargement, la clé diversifiée de communication (CXd) à enregistrer dans le module de sécurité (MST1) du terminal étant transmise du module de chargement (MCH) au module de sécurité du terminal, sous forme diversifiée et chiffrée (CXdc), la diversification (CXd) de cette clé utilisant un algorithme de diversification du module de chargement faisant intervenir la clé de base (CX) de communication contenue dans le module de chargement ainsi que des informations de diversification provenant du module de sécurité du terminal MST1, le chiffrement de cette clé diversifiée de communication (CXdc) utilisant un algorithme de chiffrement faisait intervenir la clé diversifiée de communication (CXd), ainsi qu'une deuxième clé diversifiée de transport (CTd2) obtenue par un algorithme de diversification contenu dans le module de chargement et faisant intervenir la clé de base (CT) de cette deuxième clé de transport contenue dans le module de chargement (MCH), ainsi que des informations de diversification provenant du module de sécurité (MST1) du terminal.

9. Procédé selon la revendication 8, caractérisé en ce que l'algorithme de diversification contenu dans le module de sécurité (MSC1) de l'unité centrale pour diversifier (CPd) une clé d'exploitation à transmettre à la carte utilisateur, fait intervenir la clé de base (CP) de cette clé d'exploitation contenue dans ce module de sécurité, ainsi que des informations de diversification provenant de la carte utilisateur, le chiffrement de la clé diversifiée d'exploitation (CPdc) étant obtenu par un algorithme contenu dans le module de sécurité de l'unité centrale et faisant intervenir la clé diversifiée d'exploitation (CPd), ainsi qu'une clé diversifiée d'ouverture (COd) enregistrée dans la carte utilisateur et calculée dans le module de sécurité de l'unité centrale par un algorithme de diversification faisant intervenir une clé de base (CO) de cette clé d'ouverture, enregistrée dans le module de sécurité de l'unité centrale, ainsi que des informations de diversification provenant de la carte utilisateur.

10. Procédé selon la revendication 9, caractérisé en ce que la clé de base d'ouverture (CO) enregistrée dans le module de sécurité de l'unité centrale est transmise sous forme chiffrée (COc) par le module de chargement, le chiffrement de cette clé de base étant obtenu par un algorithme de chiffrement contenu dans le module de chargement, et utilisant ladite première clé (CTd1) diversifiée de transport.

11. Procédé selon la revendication 10, caractérisé en ce que la clé diversifiée d'ouverture (COd) enregistrée dans la carte utilisateur, est transmise à la carte utilisateur sous forme chiffrée (COdc) bar le module de sécurité (MSC1) de l'unité centrale, le chiffrement de cette clé diversifiée d'ouverture utilisant un algorithme de chiffrement contenu dans le module de sécurité de l'unité centrale et faisant intervenir cette clé d'ouverture diversifiée (COd) ainsi qu'une clé de fabrication diversifiée (CFd) préenregistrée dans la carte et calculée par le module de sécurité (MSC1) à partir d'une clé de fabrication de base (CF).

12. Procédé selon la revendication 11, caractérisé en ce que la clé de base (CF) des clés de fabrication diversifiées préenregistrées dans les cartes usager est transmise au module de sécurité de l'unité centrale, sous forme chiffrée (CFc), le module de chargement contenant un algorithme de chiffrement faisant intervenir cette clé de base (CF) des clés diversifiées préenregistrées, ainsi que la première clé de transport (CTd1) calculée par le module de chargement et présente dans le module de sécurité (MSC1) de l'unité centrale.

13. Procédé selon une des revendications 6, 8, 10, caractérisé en ce que les première et deuxième clés de transport diversifiées sont respectivement préenregistrées dans le module de sécurité (MSC1) de l'unité centrale et dans le module de sécurité (MST1) du terminal.

14. Application du procédé selon l'une des revendications 1 à 13 à un réseau constitué d'une unité centrale (C1) et d'au moins un terminal (T1) comportant chacun au moins un module de sécurité (MSC1, MST1), caractérisée en ce que, préalablement à la mise en place des modules de sécurité du réseau, une clé de transport diversifiée déterminée correspondant à un module de chargement est enregistrée dans chacun d'eux.

15. Application selon la revendication 14, caractérisée en ce que le réseau coopérant avec des cartes utilisateur (U1), dans chacune d'entre elles est enregistrée, préalablement à sa mise en service, au moins une clé d'ouverture diversifiée (COd).

**Claims**

1. Method of routing at least one predetermined secret key (CP), with the object of protecting the operation of a service, from one security module (MSC1) of a central processing unit (C1) of a network for operating a service to another security module (MST1) of a terminal (T1) of this network, or one of the user cards (U1) connectable to the terminal (T1) and themselves constituting security modules, characterised in that it consists of transmitting a predetermined operating key (CPd) in coded form, from a security module (MSC1) having a predetermined hierarchical level to a security module (MST1) or card (U1) having a hierarchical level lower than the predetermined level, this coding consisting of using a coding algorithm contained in the module with the predetermined hierarchical level and involving the predetermined operating key as well as at least one diversified transfer key (CTd; CXd; COd) recorded in the module having a hierarchical level lower than the predetermined level, this diversified transfer key necessary for coding is obtained by a diversification algorithm contained in the module of predetermined hierarchical level and involving a base key (CT) of this diversified transfer key, as well as diversification data coming from the module of lower hierarchical level, the coded predetermined operating key (CPd) being decoded by using, in the module with a hierarchical level lower than the predetermined level, a decoding algorithm which is the reverse of the coding algorithm.

2. Method according to claim 1, characterised in that any diversified key (CPd) transmitted from a module of predetermined hierarchical level to a module of lower hierarchical level in order to be recorded therein, is coded, the method consisting of using a coding algorithm contained in the module of predetermined hierarchical level and involving the diversified operating key (CPd) to be transmitted, as well as a diversified transfer key (CTd; CXd; COd) calculated by the diversification algorithm contained in the module of predetermined hierarchical level and recorded in the module of hierarchical level lower than the predetermined level, the diversified key (CPd) thus coded being decoded by an algorithm which is the reverse of the coding algorithm, contained in the module of hierarchical level lower than the predetermined level.

3. Method according to claim 2, characterised in that it consists of using a loading module (MCH) connectable to the module with the highest hierarchical level in the network, this module containing base keys recorded by an authorised body, these base keys corresponding to the predetermined operating keys (CPd) to be routed, as well as to the diversified keys serving for the coded transmission of each predetermined secret operating key, this loading module containing at least one algorithm for the diversification of base keys and at least one algorithm for the coding of base keys or diversified keys to be transmitted to the modules of the network for routing the operating keys.

4. Method according to claim 3, characterised in that diversified keys are prerecorded respectively in the modules and in the cards by an authorised body before use of the modules and cards in the network.

5. Method according to claim 4, characterised in that it consists of coding (CPc1), by a coding algorithm contained in the loading module (MCH), a first predetermined base key (CP) for operation of a service recorded in this loading module, this first coded key (CPc1) being transmitted from the loading module (MCH) to the security module (MSC1) of the central processing unit where it is decoded (CP) by an algorithm which is the reverse of the coding algorithm, this first key (CP) being recoded (CPc2) by a coding algorithm contained in the security module (MSC1) of the central processing unit in order to be transmitted to the security module (MST1) of the terminal where it is decoded by an algorithm which is the reverse of the coding algorithm, this first key being diversified and coded (CPdc) in the security module of the central processing unit, by diversification algorithms (CPd) and coding algorithms (CPdc) contained in the module of the central processing unit, in order to be transmitted to the user card where it is decoded by an algorithm which is the reverse of the coding algorithm.

6. Method according to claim 5, characterised in that the coding algorithm of the first operating key (CPc1) transmitted from the loading module (MCH) to the security module (MSC1) of the central processing unit involves the base key (CP) of this first key, as well as a first diversified transfer key (CTd) obtained by a diversification algorithm contained in the loading module and involving a base key (CT) of this first transfer key contained in the loading module, as well as diversification data coming from the security module (MSC1) of the central processing unit.

7. Method according to claim 5, characterised in that the coding algorithm of the first coded key (CPc2) transmitted from the security module (MSC1) of the central processing unit to the security module (MST) of the terminal involves this first key (CP) contained in the security module (MSC1) of the central processing unit, as well as a diversified communication key (CXd) recorded in the security module (MST1) of the terminal and calculated in the security module of the central processing unit, by a diversification algorithm involving the base key (CX) of this diversified communication key recorded in the security module (MSC1) of the central processing unit, as well as diversification data coming from the security module (MST1) of the terminal.

8. Method according to claim 7, characterised in that the base communication key (CX) recorded in the security module (MSC1) of the central processing unit is transmitted in coded form (CXc) from the loading module (MCH) to the security module of the central processing unit, the coding of this communication key using a coding algorithm contained in the loading module and involving the base key (CX) contained in the loading module, as well as the first diversified transfer key (CTd1) calculated in the loading module, the diversified communication key (CXd) to be recorded in the security module (MST1) of the terminal being transmitted from the loading module (MCH) to the security module of the terminal, in diversified and coded form (CXdc), the diversification (CXd) of this key using a diversification algorithm of the loading module involving the base communication key (CX) contained in the loading module as well as diversification data coming from the security module of the terminal (MST1), the coding of this diversified communication key (CXdc) using a coding algorithm involving the diversified communication key (CXd), as well as a second diversified transfer key (CTd2) obtained by a diversification algorithm contained in the loading module and involving the base key (CT) of this second transfer key contained in the loading module (MCH), as well as diversification data coming from the security module (MST1) of the terminal.

9. Method according to claim 8, characterised in that the diversification algorithm contained in the security module (MSC1) of the central processing unit for diversifying (CPd) an operating key to be transmitted to the user card, involves the base key (CP) of this operating key contained in this security module, as well as diversification data coming from the user card, the coding of the diversified operating key (CPdc) being obtained by an algorithm contained in the security module of the central processing unit and involving the diversified operating key (CPd), as well as a diversified opening key (COd) recorded in the user card and calculated in the security module of the central processing unit by a diversification algorithm involving a base key (CO) of this opening key, recorded in the security module of the central processing unit, as well as diversification data coming from the user card.

10. Method according to claim 9, characterised in that the base opening key (CO) recorded in the security module of the central processing unit is transmitted in coded form (COc) by the loading module, the coding of this base key being obtained by a coding algorithm contained in the loading module, and using said first diversified transfer key (CTd1).

11. Method according to claim 10, characterised in that the diversified opening key (COd) recorded in the user card is transmitted to the user card in coded form (COdc) by the security module (MSC1) of the central processing unit, the coding of this diversified opening key using a coding algorithm contained in the security module of the central processing unit and involving this diversified opening key (COd) as well as a diversified fabrication key (CFd) prerecorded in the card and calculated by the security module (MSC1) from a base fabrication key (CF).

12. Method according to claim 11, characterised in that the base key (CF) of the diversified fabrication keys prerecorded in the user cards is transmitted to the security module of the central processing unit, in coded form (CFc), the loading module containing a coding algorithm involving this base key (CF) of the prerecorded diversified keys, as well as the first transfer key (CTd1) calculated by the loading module and present in the security module (MSC1) of the central processing unit.

13. Method according to any of claims 6, 8, 10, characterised in that the first and second diversified transfer keys are respectively prerecorded in the security module (MSC1) of the central processing unit and in the security module (MST1) of the terminal.

14. Application of the method according to any of claims 1 to 13 to a network consisting of a central processing unit (C1) and at least one terminal (T1) each comprising at least one security module (MSC1, MST1), characterised in that, prior to installation of the security modules of the network, a given diversified transfer key corresponding to a loading module is recorded in each of them.

15. Application according to claim 14, characterised in that the network cooperating with user cards (U1), in each of them is recorded, prior to putting it into operation, at least one diversified opening key (COd).

## Patentansprüche

1. Verfahren zum Übermitteln wenigstens eines vorbestimmten, geheimen Schlüssels (CP) zum Zwecke der Absicherung einer Dienstleistung von einem Sicherheitsmodul (MSC1) einer Zentraleinheit (C1) in einem Dienstleistungs-Netzwerk zu einem anderen Sicherheitsmodul (MST1) eines Terminals dieses Netzwerks oder zu einer der Benutzerkarten (U1), die an das Terminal (T1) anschließbar sind und als solche Sicherheitsmodule bilden, dadurch gekennzeichnet, daß es aus einem Übertragen eines vorbestimmten Betriebsschlüssels (CPd) eines Sicherheitsmoduls (MSC1), das eine vorbestimmte Rangstufe einnimmt, zu einem Sicherheitsmodul (MST1) oder einer Karte (U1) mit einer Rangstufe, die niedriger als die vorbestimmte Stufe ist, in verschlüsselter Form besteht, wobei dieses Verschlüsseln aus der Verwendung eines im Modul mit der vorbestimmten Rangstufe enthaltenen Verschlüsselungsalgorithmus besteht und den vorbestimmten Betriebsschlüssel sowie wenigstens einen Transportschlüssel (CTd; CXd; COd) benutzt, der diversifiziert in das Modul mit der zur vorbestimmten Rangstufe untergeordneten Stufe eingespeichert ist, wobei dieser zum Verschlüsseln notwendige, diversifizierte Transportschlüssel durch einen im Modul mit der vorbestimmten Rangstufe enthaltenen Diversifikationsalgorithmus erhalten wird und einen Basisschlüssel (CT) dieses diversifizierten Transportschlüssels benutzt, sowie Diversifikationsinformationen, die aus dem Modul mit der niedrigeren Rangstufe stammen, wobei der vorbestimmte, verschlüsselte Betriebsschlüssel (CPd) im Modul mit der zur vorbestimmten Rangstufe niedrigeren Stufe durch Anwendung eines zum Verschlüsselungsalgorithmus inversen Entschlüsselungsalgorithmus entschlüsselt wird.

2. Verfahren nach Anspruch 1, dadurch gekennzeichnet, daß jeder diversifizierte Schlüssel (CPd), der vom Modul mit der vorbestimmten Rangstufe zum Modul mit der niedrigeren Rangstufe übertragen wird, um dort eingespeichert zu werden, wobei das Verfahren aus der Anwendung eines im Modul mit der vorbestimmten Rangstufe enthaltenen Verschlüsselungsalgorithmus besteht und den zu übertragenden, diversifizierten Betriebsschlüssel (CPd) benutzt, sowie ein diversifizierter Transportschlüssel (CTd; CXd; COd), der durch den im Modul mit der vorbestimmten Rangstufe enthaltenen Diversifikationsalgorithmus berechnet und im Modul mit der zu der vorbestimmten Rangstufe niedrigeren Rangstufe eingespeichert wird, und daß der so verschlüsselte, diversifizierte Schlüssel (CPd) durch einen zum Verschlüsselungsalgorithmus inversen Algorithmus entschlüsselt wird, der im Modul mit der zur vorbestimmten Rangstufe niedrigeren Rangstufe enthalten ist.

3. Verfahren nach Anspruch 2, dadurch gekennzeichnet, daß es darin besteht, ein an das Modul mit der höchsten Rangstufe im Netzwerk anschließbares Lademodul (MCH) anzuwenden, welches durch ein dazu ermächtigtes Organ eingespeicherte Basisschlüssel enthält, wobei diese Basisschlüssel den zu übermittelnden, vorbestimmten Betriebsschlüsseln (CPd) entsprechen, sowie den diversifizierten Schlüsseln, die der verschlüsselten Übertragung jedes vorbestimmten, geheimen Betriebsschlüssels dienen, wobei das Lademodul wenigstens einen Diversifikationsalgorithmus für Basisschlüssel und wenigstens einen Verschlüsselungsalgorithmus für Basisschlüssel oder diversifizierte Schlüssel enthält, die zum Übermitteln der Betriebsschlüssel an die Netzwerkmodule übertragen werden müssen.

4. Verfahren nach Anspruch 3, dadurch gekennzeichnet, daß diversifizierte Schlüssel jeweils in die Module und in die Karten durch ein dazu ermächtigtes Organ vor der Benutzung der Module und der Karten im Netzwerk eingeschrieben werden.

5. Verfahren nach Anspruch 4, dadurch gekennzeichnet, daß es darin besteht, mittels eines im Lademodul (MCH) enthaltenen Verschlüsselungsalgorithmus einen ersten vorbestimmten, in diesem Lademodul eingespeicherten Basisschlüssel (CP) für eine Dienstleistung zu verschlüsseln (CPc1), wobei dieser erste verschlüsselte Schlüssel vom Lademodul (MCH) zum Sicherheitsmodul (MSC1) der Zentraleinheit übertragen wird, wo er durch einen zum Verschlüsselungsalgorithmus inversen Algorithmus entschlüsselt wird (CP), wobei dieser erste Schlüssel (CP) von neuem durch einen im Sicherheitsmodul (MSC1) der Zentraleinheit enthaltenen Verschlüsselungsalgorithmus verschlüsselt wird (CPc2), um zu dem Sicherheitsmodul (MST1) des Terminals übertragen zu werden, wo er durch einen zum Verschlüsselungsalgorithmus inversen Algorithmus entschlüsselt wird, wobei dieser erste Schlüssel in dem Sicherheitsmodul der Zentraleinheit durch einen im Modul der Zentraleinheit enthaltenen Diversifikationsalgorithmus (CPd) und Verschlüsselungsalgorithmus (CPdc) diversifiziert und verschlüsselt wird (CPdc), um zur Benutzerkarte übertragen zu werden, wo er durch einen zum Verschlüsselungsalgorithmus inversen Algorithmus entschlüsselt wird.

6. Verfahren nach Anspruch 5, dadurch gekennzeichnet, daß der Verschlüsselungsalgorithmus des ersten, vom Lademodul (MCH) zum Sicherheitsmodul (MSC1) der Zentraleinheit übertragenen Betriebsschlüssels (CPc1) den Basisschlüssel (CP) dieses ersten Schlüssels benutzt, wie auch einen ersten diversifizierten Transportschlüssel (CTd), der durch einen im Lademodul enthaltenen Diversifikationsalgorithmus erhalten wird und einen im Lademodul enthaltenen Basisschlüssel (CT) des ersten Transportschlüssels benutzt, sowie die aus dem Sicherheitsmodul (MSC1) der Zentraleinheit stammenden Diversifikationsinformationen.

7. Verfahren nach Anspruch 5, dadurch gekennzeichnet, daß der Verschlüsselungsalgorithmus des ersten verschlüsselten, vom Sicherheitsmodul (MSC1) der Zentraleinheit zum Sicherheitsmodul (MST) des Terminals übertragenen Schlüssels (CPc2) diesen ersten im Sicherheitsmodul (MSC1) der Zentraleinheit enthaltenen Schlüssels (CP) benutzt, wie auch einen diversifizierten Kommunikationsschlüssel (CXd), der im Sicherheitsmodul (MST) des Terminals eingespeichert und im Sicherheitsmodul der Zentraleinheit durch einen Diversifikationsalgorithmus, der den Basisschlüssel (CX) dieses diversifizierten, im Sicherheitsmodul (MSC1) der Zentraleinheit eingespeicherten Kommunikationsschlüssels benutzt, berechnet wird, sowie aus dem Sicherheitsmodul (MST1) des Terminals stammende Diversifikationsinformationen.

8. Verfahren nach Anspruch 7, dadurch gekennzeichnet, daß der im Sicherheitsmodul (MSC1) der Zentraleinheit eingespeicherte Basiskommunikationsschlüssel (CX) in verschlüsselter Form (CXc) vom Lademodul (MCH) zum Sicherheitsmodul der Zentraleinheit übertragen wird, wobei das Verschlüsseln einen im Lademodul enthaltenen Verschlüsselungsalgorithmus und den im Lademodul enthaltenen Basisschlüssel (CX) benutzt, wie auch den ersten diversifizierten, im Lademodul berechneten Transportschlüssel (CTd1), wobei der in das Sicherheitsmodul (MST1) des Terminals einzuspeichernde, diversifizierte Kommunikationsschlüssel (Cxd) vom Lademodul (MCH) zum Sicherheitsmodul des Terminals in diversifizierter und verschlüsselter Form (CXdc) übertragen wird, wobei die Diversifikation (CXd) dieses Schlüssels einen Diversifikationsalgorithmus des Ladungsmoduls benutzt, der den im Lademodul enthaltenen Basiskommunikationsschlüssel (CX) sowie die vom Sicherheitsmodul des Terminals (MST1) stammenden Diversifikationsinformationen benutzt, wobei das Verschlüsseln des diversifizierten Kommunikationsschlüssels (CXdc) einen Verschlüsselungsalgorithmus benutzt, der den diversifizierten Kommunikationsschlüssel (CXd) benutzt, sowie einen zweiten diversifizierten Transportschlüssel (CTd2), der durch einen im Ladungsmodul enthaltenen Diversifikationsalgorithmus erhalten wird und den im Lademodul enthaltenen Basisschlüssel (CT) des zweiten Transportschlüssels benutzt, sowie aus dem Sicherheitsmodul (MST1) des Terminals stammende Diversifikationsinformationen.

9. Verfahren nach Anspruch 8, dadurch gekennzeichnet, daß der im Sicherheitsmodul (MC1) der Zentraleinheit enthaltene Diversifikationsalgorithmus zum Diversifizieren (CPd) eines zu einer Benutzerkarte zu übertragenden Betriebsschlüssels den in diesem Sicherheitsmodul enthaltenen Basisschlüssel (CP) dieses Betriebsschlüssels benutzt, wie auch aus der Benutzerkarte stammende Diversifikationsinformationen, wobei das Verschlüsseln des diversifizierten Betriebsschlüssels (CPdc) durch einen im Sicherheitsmodul der Zentraleinheit enthaltenen Algorithmus erreicht wird und den diversifizierten Betriebsschlüssel (CPd) benutzt, wie auch einen diversifizierter Zugangsschlüssel (COd), der in der Benutzerkarte eingespeichert und im Sicherheitsmodul der Zentraleinheit durch einen einen Basisschlüssel (CO) dieses im Sicherheitsmodul der Zentraleinheit eingespeicherten Zugangsschlüssels nutzenden Algorithmus berechnet wird, wie auch von der Benutzerkarte stammende Diversifikationsinformationen.

10. Verfahren nach Anspruch 9, dadurch gekennzeichnet, daß der im Sicherheitsmodul der Zentraleinheit eingespeicherte Basiszugangsschlüssel (CO) in verschlüsselter Form (COc) durch das Lademodul übertragen wird, wobei das Verschlüsseln dieses Basisschlüssels durch einen im Lademodul enthaltenen Algorithmus erhalten wird und den ersten diversifizierten Transportschlüssel (CTd1) benutzt.

11. Verfahren nach Anspruch 10, dadurch gekennzeichnet, daß der in der Benutzerkarte eingespeicherte, diversifizierte Zugangsschlüssel (COd) zur Benutzerkarte in verschlüsselter Form (COdc) durch das Sicherheitsmodul (MSC1) der Zentraleinheit übertragen wird, wobei das Verschlüsseln dieses diversifizierten Zugangsschlüssels einen im Sicherheitsmodul der Zentraleinheit enthaltenen Algorithmus und den diversifizierten Zugangsschlüssel (COd) benutzt, sowie einen diversifizierten Herstellungsschlüssel (CFd), der vorher in die Karte eingespeichert und durch ein Sicherheitsmodul (MC1), ausgehend von einem Basisherstellungsschlüssel (CF), berechnet wird.

12. Verfahren nach Anspruch 11, dadurch gekennzeichnet, daß der vorher in die Benutzerkarten eingespeicherte Basisschlüssel (CF) der diversifizierten Herstellungsschlüssel zu dem Sicherheitsmodul der Zentraleinheit in verschlüsselter Form (CFc) übertragen wird, wobei das Lademodul einen den Basisschlüssel (CF) der vorher eingespeicherten diversifizierten Schlüssel benutzenden Verschlüsselungsalgorithmus sowie den ersten Transportschlüssel (CDd1), der durch das Lademodul berechnet wird und sich im Sicherheitsmodul (MSC1) der Zentraleinheit befindet, enthält.

13. Verfahren nach einem der Ansprüche 6, 8, 10, dadurch gekennzeichnet, daß der erste und der zweite diversifizierte Transportschlüssel vorher in das Sicherheitsmodul (MSC1) der Zentraleinheit bzw. in das Sicherheitsmodul (MST1) des Terminals eingespeichert werden.

14. Anwendung des Verfahrens nach einem der Ansprüche 1 bis 13 in einem Netzwerk, das aus einer Zentraleinheit (C1) und wenigstens einem Terminal (T1) besteht, die jeder wenigstens ein Sicherheitsmodul (MSC1, MST1) enthalten, dadurch gekennzeichnet, daß vor der Bereitstellung der Sicherheitsmodule im Netzwerk ein vorbestimmter, einem Lademodul entsprechender, diversifizierter Transportschlüssel in jedem von ihnen eingespeichert wird.

15. Verwendung nach Anspruch 14, dadurch gekennzeichnet, daß das Netzwerk mit Benutzerkarten (U1) zusammenarbeitet, wobei in jeder von ihnen vor der Ausführung der Dienstleistung wenigstens ein diversifizierter Zugangsschlüssel (COd) eingespeichert wird.

FIG. 1

FIG. 2

MSC 1

CTd1

CX

MCH

CT

CX

CXc

CXdc

CTd2

CXd

MST 1

# FIG. 3

MCH

CT

CX

CP

MSC 1

CTd1

CX

CP

CPc1

CPc2

CTd2

CXd

CP

MST 1

# FIG. 4

FIG. 5

FIG. 6

FIG. 7